# EUROPEAN PATENT SPECIFICATION

(11) **EP 3 800 067 B1**
(45) Date of publication and mention of the grant of the patent: **27.11.2024**
(21) Application number: 20199793.9
(22) Date of filing: 02.10.2020
(51) Int. Cl.: B60C 1/00, C08L 9/00, C08C 19/25, C08F 236/06, C08C 19/22

(54) **RUBBER COMPOSITION AND PNEUMATIC TIRE**
KAUTSCHUKZUSAMMENSETZUNG UND LUFTREIFEN
COMPOSITION DE CAOUTCHOUC ET PNEUMATIQUE

(30) Priority: 04.10.2019 US 201916592817
(43) Date of publication of application: 07.04.2021
(73) Proprietor: The Goodyear Tire & Rubber Company, Akron, OH 44316 (US)
(72) Inventor: JACOBY, Claude Charles, 6615 Wasserbillig (LU); NZULU, Frida, 7516 Rollingen (LU); ISITMAN, Nihat Ali, Hudson, OH 44236 (US); MURRAY, Aaron Patrick, Chardon, OH 44024 (US); SPILKER, Thomas Franklin, Broadview Heights, OH 44147 (US)
(74) Representative: Kutsch, Bernd

(56) References cited:
- EP-A1- 0 884 360
- EP-A1- 3 560 992
- US-A1- 2019 030 953

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

Tires are sometimes desired with treads for promoting traction on snowy surfaces. Various rubber compositions may be proposed for tire treads. Here, the challenge is to reduce the cured stiffness of such tread rubber compositions, as indicated by having a lower elastic modulus E' at -30°C, when the tread is intended to be used for low temperature winter conditions, particularly for vehicular snow driving.

It is considered that significant challenges are presented for providing such tire tread rubber compositions for maintaining both their wet traction while promoting wet, rolling resistance, wear and low temperature (e.g., winter) performance.

US 2019/0030953 A1 discloses a rubber composition that may comprise an isoprene-butadiene copolymer together with a filler and other additives.

EP 0 884 360 A1 discloses a technique for reducing cold flow of rubbers such as isoprene-butadiene rubber.

### Summary of the invention

The invention relates to a rubber composition in accordance with claim 1 and to a pneumatic tire in accordance with claim 13.

Dependent claims refer to preferred embodiments of the invention.

In one aspect, the present invention is directed to a pneumatic tire having a tread comprising a vulcanizable rubber composition comprising, based on 100 parts by weight of elastomer (phr),
(A) from 20 to 100 phr of a solution polymerized functionalized isoprene-butadiene rubber having a glass transition temperature (Tg) ranging from -100°C to -50°C;
(B) from 0 to 40 phr of a polybutadiene;
(C) from 0 to 20 phr of a process oil;
(D) from 40 to 80 phr of a resin having a Tg greater than 30°C; and
(E) from 100 to 180 phr of silica,
wherein the functionalized isoprene-butadiene rubber is functionalized with a silyl group or wherein the functionalized isoprene-butadiene rubber is functionalized with an alkoxysilane group and optionally an amino group.

### Description of Example Embodiments of the Invention

There is disclosed a pneumatic tire having a tread comprising a vulcanizable rubber composition comprising, based on 100 parts by weight of elastomer (phr),
(A) from 20 to 100 phr of a solution polymerized functionalized isoprene-butadiene rubber having a glass transition temperature (Tg) ranging from -100°C to -50°C;
(B) from 0 to 40 phr of a polybutadiene;
(C) from 0 to 20 phr of a process oil;
(D) from 40 to 80 phr of a resin having a Tg greater than 30°C; and
(E) from 100 to 180 phr of silica;
wherein the functionalized isoprene-butadiene rubber is functionalized with a silyl group or wherein the functionalized isoprene-butadiene rubber is functionalized with an alkoxysilane group and optionally an amino group.

There is further disclosed a method of making a tire.

The rubber composition includes from 20 to 100 phr, alternatively 70 to 95 phr, of a functionalized isoprene-butadiene rubber (IBR) having a glass transition temperature (Tg) ranging from -100°C to -50°C. The isoprene-butadiene rubber may be functionalized with various functional groups. In one embodiment, the isoprene-butadiene rubber is functionalized with a silyl group. In one embodiment, the isoprene-butadiene rubber is obtained by copolymerizing isoprene and butadiene and characterized in that the isoprene-butadiene rubber has a silyl group bonded to the polymer chain. In one embodiment, the silyl group may be substituted with one or more alkoxy groups such as methoxy and ethoxy, alkyl groups such as methyl, ethyl and propyl, or alkyl amino groups such as diethylamino and dimethylamino, or vinyl groups.

The silyl group may be bonded to any of a polymerization initiating terminal, a polymerization terminating terminal, a main chain of the isoprene-butadiene rubber and a side chain, as long as it is bonded to the isoprene-butadiene rubber chain. However, the silyl group preferably introduced to the polymerization initiating terminal or the polymerization terminating terminal, in that the disappearance of energy at a polymer terminal is inhibited to improve hysteresis loss characteristics.

Further, the content of the silyl group bonded to the polymer chain of the (co)polymer rubber is preferably from 0.5 to 200 mmol/kg of isoprene-butadiene rubber. The content is more preferably from 1 to 100 mmol/kg of isoprene-butadiene rubber, and particularly preferably from 2 to 50 mmol/kg of isoprene-butadiene rubber.

The silyl group may be bonded to any of the polymerization initiating terminal, the polymerization terminating terminal, the main chain of the (co)polymer and the side chain, as long as it is bonded to the (co)polymer chain. However, the silyl group is preferably introduced to the polymerization initiating terminal or the polymerization terminating terminal, in that the disappearance of energy is inhibited from the (co)polymer terminal to be able to improve hysteresis loss characteristics.

The IBR used in the tire tread rubber blends of this invention can be synthesized by solution polymerization. Such solution polymerization will normally be carried out in a hydrocarbon solvent which can be one or more aromatic, paraffinic or cycloparaffinic compounds. These solvents will normally contain from 4 to 10 carbon atoms per molecule and will be liquids under the conditions of the polymerization. Some representative examples of suitable organic solvents include pentane, isooctane, cyclohexane, normal hexane, benzene, toluene, xylene, ethylbenzene and the like, alone or in admixture.

In the solution polymerizations employed in synthesizing, the IBR there will normally be from 5 to 35 weight percent monomers in the polymerization medium. Such polymerization media are, of course, comprised of the organic solvent, 1,3-butadiene monomer and isoprene monomer. In most cases, it will be preferred for the polymerization medium to contain from 10 to 30 weight percent monomers. It is generally more preferred for the polymerization medium to contain 20 to 25 weight percent monomer.

The monomer charge compositions utilized in the synthesis of the IBR used in the tire tread rubber compounds of this invention will typically contain from 20 weight percent to 50 weight percent isoprene and from 50 weight percent to 80 weight percent 1,3-butadiene monomer. It is typically preferred for the monomer charge composition to contain from 25 weight percent to 35 weight percent isoprene and from 65 weight percent to 85 weight percent 1,3-butadiene.

The IBR is typically synthesized on a continuous basis. In such a continuous process, the monomers and an organolithium initiator are continuously fed into a reaction vessel or series of reaction vessels. The pressure in the reaction vessel is typically sufficient to maintain a substantially liquid phase under the conditions of the polymerization reaction. The reaction medium will generally be maintained at a temperature which is within the range of 70° to 140°C throughout the copolymerization. This is generally preferred for the copolymerization to be conducted in a series of reaction vessels and for the reaction temperature to be increased from reaction vessel to reaction vessel as the polymerization proceeds. For instance, it is desirable to utilize a two-reactor system wherein the temperature in the first reactor is maintained within the range of 70°C to 90°C and wherein the temperature in the second reactor is maintained within the range of 90°C to 100°C.

The IBR may be synthesized using conventional organolithium initiators, or may be synthesized using neodymium containing catalyst systems.

The organolithium compounds which can be utilized as initiators are normally organomonolithium compounds. The organolithium compounds which are preferred can be represented by the formula R--Li, wherein R represents a hydrocarbyl radical containing from 1 to 20 carbon atoms. Generally, such organolithium compounds will contain from 1 to 10 carbon atoms. Some representative examples of organolithium compounds which can be employed include methyllithium, ethyllithium, isopropyllithium, n-butyllithium, sec-butyllithium, n-octyllithium, tert-octyllithium, n-decyllithium, phenyllithium, 1-napthyllithium, 4-butylphenyllithium, p-tolyllithium, 1-naphthyllithium, 4-butylphenyllithium, p-tolyllithium, 4-phenylbutyllithium, cyclohexyllithium, 4-butylcyclohexyllithium and 4-cyclohexylbutyllithium.

The amount of organolithium initiator employed will be dependent upon the molecular weight which is desired for the IBR being synthesized. An amount of organolithium initiator will be selected to result in the production of IBR having a Mooney ML1+4 viscosity which is within the range of 55 to 140.

As a general rule in all anionic polymerizations, the molecular weight (Mooney viscosity) of the polymer produced is inversely proportional to the amount of catalyst utilized. As a general rule, from 0.01 to 1 phm (parts per hundred parts of monomer by weight) of the organolithium compound will be employed. In most cases, it will be preferred to utilize from 0.015 to 0.1 phm of the organolithium compound with it being most preferred to utilize from 0.025 phm to 0.07 phm of the organolithium compound.

To inhibit gelation, it is important to carry out such polymerizations in the presence of a trace amount of a polar modifier, such as N,N,N',N'-tetramethylethylenediamine (TMEDA). For this reason, it is highly desirable to continuously feed a polar modifier into the reaction vessel utilized. Ethers and tertiary amines which act as Lewis bases are representative examples of polar modifiers that can be utilized. Some specific examples of typical polar modifiers include diethyl ether, di-n-propyl ether, diisopropyl ether, di-n-butyl ether, tetrahydrofuran, dioxane, ethylene glycol dimethyl ether, ethylene glycol diethyl ether, diethylene glycol dimethyl ether, diethylene glycol diethyl ether, triethylene glycol dimethyl ether, trimethylamine, triethylamine, N,N,N',N'-tetramethylethylenediamine, N-methyl morpholine, N-ethyl morpholine, N-phenyl morpholine and the like. Dipiperidinoethane, dipyrrolidinoethane, tetramethylethylene diamine, diethylene glycol, dimethyl ether, TMEDA and tetrahydrofuran are representative of highly preferred modifiers.

Optionally, 1,2-butadiene can also be continuously fed into the reaction zone. The 1,2-butadiene will typically be present in the polymerization medium at a concentration which is within the range of 10 to 500 ppm (parts per million parts). It is generally preferred for the 1,2-butadiene to be present at a level which is within the range of 50 ppm to 300 ppm. It is generally more preferred for the 1,2-butadiene to be present at a level which is within the range of 100 ppm to 200 ppm.

The polar modifier will typically be present at a molar ratio of the polar modifier to the organolithium compound which is within the range of 0.01:1 to 0.2:1. A molar ratio of polar modifier to the organolithium initiator of greater than 0.2:1 should not be exceeded because the polar modifier acts to increase the glass transition temperature of the IBR produced.

The IBR produced is then recovered from the organic solvent. The IBR can be recovered from the organic solvent by standard techniques, such as decantation, filtration, centrification and the like. It is often desirable to precipitate the IBR from the organic solvent by the addition of lower alcohols containing from 1 to 4 carbon atoms to the polymer solution. Suitable lower alcohols for precipitation of the IBR from the polymer cement include methanol, ethanol, isopropyl alcohol, n-propyl alcohol and t-butyl alcohol. The utilization of lower alcohols to precipitate the IBR from the polymer cement also inactivates lithium end groups. After the IBR is recovered from the organic solvent, steam-stripping can be employed to reduce the level of volatile organic compounds in the rubber.

The solution polymerized IBR has a glass transition temperature in a range from - 100°C to -50°C.

A reference to glass transition temperature, or Tg, of an elastomer or elastomer composition, where referred to herein, represents the glass transition temperature(s) of the respective elastomer or elastomer composition in its uncured state (or possibly a cured state).

The Tg is determined as a peak midpoint by a differential scanning calorimeter (DSC) at a temperature rate of increase of 10°C per minute according to ASTM D7426-08 (2013) or equivalent.

Solution polymerized IBR containing silyl groups substituted with groups such as alkoxy, amino, alkylamino, thioether, hydroxyl, vinyl and the like may also be used as the functionalized IBR. Such functional groups are useful as being capable of chemically interacting with silica and carbon black fillers, and with polymer unsaturation. Such functionalized IBR may be produced using functional initiators, functional monomers, or functional terminators as is known in the art. Functionalized IBR may include functional groups appended to one or both ends of the IBR, and/or appended along the length of the polymer chain.

Suitable functionalized IBR may be produced, for example, following the procedures of US-A-5,652,310.

The solution polymerized functionalized isoprene-butadiene rubber has a glass transition temperature in a range from -100°C to -50°C.

The rubber composition may further include from 0 to 40 phr, alternatively 5 to 30 phr, of a polybutadiene. In one embodiment, the polybutadiene has a cis 1,4 content greater than 95 percent and a Tg ranging from -90°C to -110°C. In other embodiments, the polybutadiene has a cis 1,4 content ranging from 20 to 50 percent by weight, or a vinyl content ranging from 5 to 20 percent by weight. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -90°C to -110°C. Suitable polybutadiene rubbers are available commercially, such as Budene^{®} 1223 from Goodyear and the like, having a Tg of -108°C and cis 1,4, content of 96%.

The rubber composition may include 0 to 20 phr, alternatively 4 to 15 phr, of a processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, and low PCA oils, such as MES, TDAE, and heavy naphthenic oils, vegetable oils such as sunflower, soybean, and safflower oils, and monoesters of fatty acids selected from the group consisting of alkyl oleates, alkyl stearates, alkyl linoleates, and alkyl palmitates.

Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

Suitable TDAE oils are available as Tudalen SX500 from Klaus Dahleke KG, VivaTec 400 and VivaTec 500 from H&R Group, and Enerthene 1849 from BP, and Extensoil 1996 from Repsol. The oils may be available as the oil alone or along with an elastomer in the form of an extended elastomer.

Suitable vegetable oils include, for example, soybean oil, sunflower oil and canola oil which are in the form of esters containing a certain degree of unsaturation.

The rubber composition further includes from 40 to 80 phr, alternatively 50 to 70 phr, of a resin having a Tg greater than 30°C.

In one embodiment, the resin may be a hydrocarbon resin selected from C5/C9 resins, dicyclopentadiene (DCPD)/C9 resins, and terpene resins.

In one embodiment, the resin is a C5/C9 hydrocarbon resin comprising C5 and C9 hydrocarbon fractions, wherein the resin has a glass transition temperature greater than 30°C.

The measurement of Tg for resins is determined as a peak midpoint by a differential scanning calorimeter (DSC) at a temperature rate of increase of 10°C per minute, according to ASTM D6604 or equivalent.

The hydrocarbon resin has a softening point greater than 80°C and as determined by ASTM E28 which might sometimes be referred to as a ring and ball softening point.

Suitable C5/C9 resins may include both aromatic and nonaromatic components. Differences in the C5/C9 resins are largely due to the olefins in the feedstock from which the hydrocarbon components are derived. The C5/C9 resin may contain "aliphatic" hydrocarbon components which have a hydrocarbon chain formed from C4-C6 fractions containing variable quantities of piperylene, isoprene, mono-olefins, and non-polymerizable paraffinic compounds. Such C5/C9 resins are based on pentene, butane, isoprene, piperylene, and contain reduced quantities of cyclopentadiene or dicyclopentadiene. The C5/C9 resin may also contain "aromatic" hydrocarbon structures having polymeric chains which are formed of aromatic units, such as styrene, xylene, alpha-methylstyrene, vinyl toluene, and indene.

In accordance with the present invention, the C5/C9 resin used in rubber compounding includes olefins such as piperylene, isoprene, amylenes, and cyclic components. The C5/C9 resin may also contain aromatic olefins such as styrenic components and indenic components.

Piperylenes are generally a distillate cut or synthetic mixture of C5 diolefins, which include, but are not limited to, cis-1,3-pentadiene, trans-1,3-pentadiene, and mixed 1,3-pentadiene. In general, piperylenes do not include branched C5 diolefins such as isoprene. In one embodiment, the C5/C9 resin has from 40 to 90% (by weight) piperylene, or from 50 to 90%, or more preferably from 60 to 90%. In a particularly preferred embodiment, the C5/C9 resin has from 70 to 90% piperylene.

In one embodiment, the C5/C9 resin is substantially free of isoprene. In another embodiment, the C5/C9 resin contains up to 15% isoprene, or less than 10% isoprene. In yet another embodiment, the C5/C9 resin contains less than 5% isoprene.

In one embodiment, the C5/C9 resin is substantially free of amylene. In another embodiment, the C5/C9 resin contains up to 40% amylene, or less than 30% amylene, or less than 25% amylene. In yet another embodiment, the C5/C9 resin contains up to 10% amylene.

Cyclics are generally a distillate cut or synthetic mixture of C5 and C6 cyclic olefins, diolefins, and dimers therefrom. Cyclics include, but are not limited to, cyclopentene, cyclopentadiene, dicyclopentadiene, cyclohexene, 1,3-cycylohexadiene, and 1,4-cyclohexadiene. A preferred cyclic is cyclopentadiene. The dicyclopentadiene may be in either the endo or exo form. The cyclics may or may not be substituted. Preferred substituted cyclics include cyclopentadienes and dicyclopentadienes substituted with a C1 to C40 linear, branched, or cyclic alkyl group, preferably one or more methyl groups. In one embodiment the C5/C9 resin may include up to 60% cyclics or up to 50% cyclics. Typical lower limits include at least 0.1% or at least 0.5% or from 1.0% cyclics are included. In at least one embodiment, the C5/C9 resin may include up to 20% cyclics or more preferably up to 30% cyclics. In a particularly preferred embodiment, the C5/C9 resin comprises from 1.0 to 15% cyclics, or from 5 to 15% cyclics.

Preferred aromatics that may be in the C5/C9 resin include one or more of styrene, indene, derivatives of styrene, and derivatives of indene. Particularly preferred aromatic olefins include styrene, alpha-methylstyrene, beta-methylstyrene, indene, and methylindenes, and vinyl toluenes. The aromatic olefins are typically present in the C5/C9 resin from 5 to 45%, or more preferably from 5 to 30%. In particularly preferred embodiments, the C5/C9 resin comprises from 10 to 20% aromatic olefins.

Styrenic components include styrene, derivatives of styrene, and substituted styrenes. In general, styrenic components do not include fused-rings, such as indenics. In one embodiment, the C5/C9 resin comprises up to 60% styrenic components or up to 50% styrenic components. In one embodiment, the C5/C9 resin comprises from 5 to 30% styrenic components, or from 5 to 20% styrenic components. In a preferred embodiment, the C5/C9 resin comprises from 10 to 15% styrenic components.

The C5/C9 resin may comprise less than 15% indenic components, or less than 10% indenic components. Indenic components include indene and derivatives of indene. In one embodiment, the C5/C9 resin comprises less than 5% indenic components. In another embodiment, the C5/C9 resin is substantially free of indenic components.

Preferred C5/C9 resins have melt viscosity of from 300 to 800 centipoise (cPs) at 160°C, or more preferably of from 350 to 650 cPs at 160°C. In a particularly preferred embodiment, the C5/C9 resin's melt viscosity is from 375 to 615 cPs at 160°C, or from 475 to 600 cPs at 160°C. The melt viscosity may be measured by a Brookfield viscometer with a type "J" spindle, ASTM D6267.

Generally, C5/C9 resins have a weight average molecular weight (Mw) greater than 600 g/mole or greater than 1000 g/mole. In at least one embodiment, C5/C9 resins have a weight average molecular weight (Mw) of from 1650 to 1950 g/mole, or from 1700 to 1900 g/mole. Preferably C5/C9 resins have a weight average molecular weight of from 1725 to 1890 g/mole. The C5/C9 resin may have a number average molecular weight (Mn) of from 450 to 700 g/mole, or from 500 to 675 g/mole, or more preferably from 520 to 650 g/mole. The C5/C9 resin may have a z-average molecular weight (Mz) of from 5850 to 8150 g/mole, or more preferably from 6000 to 8000 g/mole. Mw, Mn, and Mz are determined by gel permeation chromatography (GPC).

Molecular weight refers to the true molecular weight in g/mol of a polymer (copolymer or block of a copolymer). It is measured with gel permeation chromatography (GPC) using polystyrene calibration standards according to ASTM 5296-11 or equivalent.

Mn (number average molecular weight), Mw (weight average molecular weight) and Mz (z average molecular weight) can be suitably determined together using gel permeation chromatography (GPC) according to ASTM 5296-11 using polystyrene calibration standards (for further explanations, please see ASTM 5296-11 and/or Saviour A. Umoren and Moses M. Solomon, Polymer Characterization: Polymer Molecular Weight Distribution, March 2016, in Polymer Science, pages 412-419, in particular and sections 2 and 3.3.1).

The polydispersity index or polydispersity is the ratio of Mw/Mn, i.e. the ratio of the weight average molecular weight to the number average molecular weight.

Gel permeation chromatography (GPC) is a well-known method wherein polymers are separated according to molecular size, the largest molecule eluting first. The chromatograph is calibrated using commercially available polystyrene molecular weight standards. The detector used is an ultraviolet detector. The fraction of chains existing as mono chains is determined as the ratio of the areas under the GPC curve, i.e., (mono chain peak area)/(total area).

In one embodiment the C5/C9 resin has a polydispersion index ("PDI", PDI=Mw/Mn) of 4 or less. In a particularly preferred embodiment, the C5/C9 resin has a PDI of from 2.6 to 3.1.

Preferred C5/C9 resins have a glass transition temperature (Tg) of from 30°C to 100°C, or from 0°C to 80°C, or from 40°C to 60°C, or from 45°C to 55°C, or more preferably of from 48°C to 53°C.

In another embodiment the C5/C9 resin may be hydrogenated.

In one embodiment, the C5/C9 resin comprises 50-90% (by weight) piperylene, 0-5% isoprene, 10-30% amylenes, 0-5% cyclics, 0-10% styrenics, and 0-10% indenics.

In one embodiment, the C5/C9 resin comprises 50-90% (by weight) piperylene, 0-5% isoprene, 10-30% amylenes, 2-5% cyclics, 4-10% styrenics, and 4-10% indenics.

In one embodiment, the C5/C9 comprises 60% (by weight) piperylene, 22% amylene, 3% cyclics, 6% styrene, and 6% indene, and further has a melt viscosity at 160 C of 436 cPs; Mn of 855 g/mole; Mw of 1595 g/mole; Mz of 3713 g/mole; PDI of 1.9; and Tg of 47 C.

The C5/C9 resin or DCPD/C9 resin may further be characterized by its aromatic hydrogen content, as determined by 1H NMR. In one embodiment, the C5/C9 resin has an aromatic hydrogen content less than 25 mole percent. In one embodiment, the C5/C9 resin has an aromatic hydrogen content is between 3 and 15 mole percent.

An example of a useful hydrocarbon polymer additive is the Oppera series of polymeric additives commercially available from ExxonMobil Chemical Company, including but not limited to Oppera 373.

In one embodiment, the resin is a DCPD/C9 resin. A suitable DCPD/C9 resin is a hydrogenated DCPD/C9 resin available as Oppera 383 having an aromatic hydrogen content of 10 mole percent.

In one embodiment, the resin is a terpene resin. In one embodiment, the resin may be a terpene resin comprised of polymers of at least one of limonene, alpha pinene and beta pinene.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials, and such terms are well known to those having skill in the rubber mixing or rubber compounding art.

The vulcanizable rubber composition may include from 100 to 180 phr of silica, alternatively from 120 to 150 phr.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

Various commercially available silicas may be used, such as, only for example herein, and without limitation, silicas commercially available from PPG Industries under the Hi-Sil trademark with designations 210, 243 and 315; silicas available from Rhodia, with, for example, designations of Z1165MP and Z165GR; and silicas available from Degussa AG with, for example, designations VN2 and VN3.

Pre-hydrophobated precipitated silica may be used. By pre-hydrophobated, it is meant that the silica is pretreated, i.e., the pre-hydrophobated precipitated silica is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes. Alternatively, the precipitated silica may be pre-treated with a silica coupling agent comprised of, for example, an alkoxyorganomercaptosilane or combination of alkoxysilane and alkoxyorganomercaptosilane prior to blending the pre-treated silica with the rubber instead of reacting the precipitated silica with the silica coupling agent in situ within the rubber. For example, see US-B-7,214,731. For various pre-treated precipitated silicas see, for example, US-A-4,704,414, US-B-6,123,762 and US-B-6,573,324. Suitable pre-treated or pre-hydrophobated silica is available commercially for example as Agilon 400 from PPG.

The vulcanizable rubber composition may include from 1 to 20 phr of carbon black.

Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm3/100 g.

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z V

in which Z is selected from the group consisting of 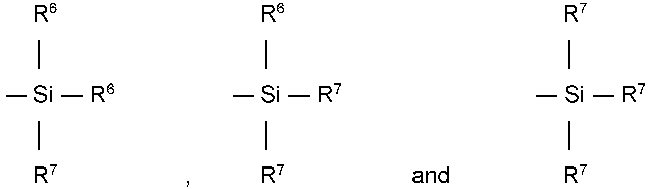 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula V, preferably Z is 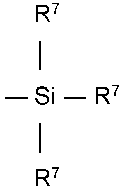 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in US-B-6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In one embodiment, the sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is NXT-Z^{™} from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound of formula I in a rubber composition will vary depending on the level of other additives that are used. Generally speaking, the amount of the compound of formula I will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1 to 6 phr being preferred. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 5 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 2.0, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a tread of a tire.

The pneumatic tire of the present invention may be a race tire, passenger tire, aircraft tire, agricultural, earthmover, off-the-road, or truck tire. Preferably, the tire is a passenger or truck tire. The tire may also be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

### Example

This example illustrates the advantage of a rubber composition according to the invention. Rubber compounds were mixed according to the formulation shown in Table 1, with amounts given in phr. The compounds were cured and tested for physical properties as shown in Table 2. The inventive rubber composition comprised of the functionalized IBR demonstrates simultaneous improvements in predicted wet, RR and Wear properties of the tread compound. C1 and E1 are comparative examples, and E2 is according to the invention.

**Table 1**

| Composition | **C1** | **E1** | **E2** |
|---|---|---|---|
| Styrene-Butadiene Rubber¹ | 40 | 0 | 0 |
| Isoprene-Butadiene Rubber² | 0 | 90 | 0 |
| Isoprene-Butadiene Rubber, functionalized³ | 0 | 0 | 90 |
| Polybutadiene ⁴ | 60 | 10 | 10 |
| Silica⁵ | 140 | 140 | 140 |
| Oil | 5 | 5 | 5 |
| Silane ⁶ | 8.8 | 8.8 | 8.8 |
| Traction Resin ⁷ | 62 | 62 | 62 |

| | | | |
|---|---|---|---|
| ¹ Solution polymerized SBR with styrene content of 15% and 1,2-vinyl content of 30%, Tg = - 60°C obtained from Trinseo as SLR3402. ² Solution polymerized IBR, 30/70 wt/wt isoprene/butadiene, Tg -80°C from Goodyear Chemical. ³ Solution polymerized IBR, 30/70 wt/wt isoprene/butadiene, Tg -80°C, functionalized with substituted silyl groups, from Goodyear Chemical. ⁴ High cis polybutadiene, obtained as Budene 1223 from The Goodyear Tire & Rubber Company. ⁵ Hi-Sil 315G-D precipitated silica from PPG with a CTAB surface area of 125 m²/g ⁶ TESPD type silane coupling agent. ⁷ Petroleum traction resin made of C5 and C9 monomers, Tg=+38°C, with an aromatic hydrogen content of around 12 mole%, obtained as Oppera PR373 from ExxonMobil. | | | |

**Table 2**

| Composition | **C1** | **E1** | **E2** |
|---|---|---|---|
| Compound Tg, °C | -43 | -45 | -44 |
| DIN Abrasion ¹ | | | |
| (Relative volume loss in mm³, lower is better) | 114 | 105 | 103 |
| Wet grip property² | | | |
| Rebound at -10°C (%, lower is better) | 9.9 | 9.3 | 9.0 |
| Low temperature property³ | | | |
| E' at 0.25% strain, -30°C (MPa) | 92.0 | 82.0 | 77.7 |
| RR Property² | | | |
| Rebound at 100°C (%, higher is better) | 45.5 | 45.8 | 49.9 |

| | | | |
|---|---|---|---|
| ¹ Data according to DIN 53516 abrasion resistance test procedure using a Zwick drum abrasion unit, model 6102 with 2.5 Newtons force. DIN standards are German test standards. ² Rebound is a measure of hysteresis of the compound when subject to loading, as measured by ASTM D1054. Generally, the lower the measured rebound at -10°C, the better the wet grip property. Generally, the higher the measured rebound at 100°C, the lower the rolling resistance. ³ The E' modulus at low temperatures can be readily be determined by means of a GABO Eplexor tester. The test specimen is subjected to 0.25% sinusoidal deformation at 1 Hz and the temperature is varied. The test method is understood to be similar to ISO 6721. | | | |

## Claims

1. A vulcanizable rubber composition for use in a tire tread, the rubber composition comprising, based on 100 parts by weight of elastomer (phr):
(A) from 20 to 100 phr of a solution polymerized functionalized isoprene-butadiene rubber having a glass transition temperature (Tg) in a range of -100°C to -50°C, and determined according to ASTM D7426-08 (2013);
(B) from 0 to 40 phr of a polybutadiene;
(C) from 0 to 20 phr of a process oil;
(D) from 40 to 80 phr of a resin having a Tg greater than 30°C, and determined according to ASTM D6604; and
(E) from 100 to 180 phr of silica;
wherein the functionalized isoprene-butadiene rubber is functionalized with a silyl group or wherein the functionalized isoprene-butadiene rubber is functionalized with an alkoxysilane group and optionally an amino group.

2. The rubber composition of claim 1, wherein the functionalized isoprene-butadiene rubber is functionalized with a silyl group substituted with at least one member of the group consisting of alkoxy groups, alkyl groups, and alkylamino groups.

3. The rubber composition of claim 1, wherein the functionalized isoprene-butadiene rubber is functionalized with a silyl group substituted with an alkoxy group selected from the group consisting of methoxy and ethoxy.

4. The pneumatic tire of claim 1, wherein the functionalized isoprene-butadiene rubber is functionalized with a silyl group substituted with an alkyl group selected from the group consisting of methyl, ethyl, and propyl.

5. The rubber composition of claim 1, wherein the functionalized isoprene-butadiene rubber is functionalized with a silyl group substituted with an alkylamino group selected from the group consisting of diethylamino and dimethylamino.

6. The rubber composition of at least one of the previous claims, wherein the resin is a C5/C9 resin comprising 50-90% (by weight) piperylenes, 0-5% isoprene, 10-30% amylenes, 0-5% cyclics or 2-5% cyclics, 0-10% styrenics or 4-10% styrenics, and 0-10% indenics or 4-10% indenics.

7. The rubber composition of at least one of the previous claims, wherein the resin is a C5/C9 resin and has an aromatic hydrogen content less than 25 mole percent, preferably between 3 and 15 mole percent.

8. The rubber composition of at least one of the previous claims, wherein the oil is selected from the group consisting of aromatic, paraffinic, naphthenic, MES, TDAE, heavy naphthenic oils, and vegetable oils.

9. The rubber composition of at least one of the previous claims, wherein the amount of the functionalized isoprene-butadiene rubber ranges from 70 to 95 phr; and/or wherein the amount of the polybutadiene ranges from 5 to 30 phr.

10. The rubber composition of at least one of the previous claims, wherein the amount of the oil ranges from 4 to 15 phr.

11. The rubber composition of at least one of the previous claims, wherein the amount of the resin ranges from 50 to 70 phr.

12. The rubber composition of at least one of the previous claims, wherein the polybutadiene has a cis 1,4 content greater than 95 percent and a Tg ranging from -80°C to - 110°C.

13. A pneumatic tire having a tread, the tread comprising the vulcanizable rubber composition of at least one of the previous claims as a vulcanized or as an unvulcanized rubber composition.

## Patentansprüche

1. Vulkanisierbare Kautschukzusammensetzung zur Verwendung in einer Reifenlauffläche, wobei die Kautschukzusammensetzung auf der Grundlage von 100 Gewichtsteilen Elastomer (ThK) das Folgende umfasst:
(A) von 20 bis 100 ThK eines lösungspolymerisierten funktionalisierten Isopren-Butadien-Kautschuks, der eine Glasübergangstemperatur (Tg) in dem Bereich von -100°C bis -50°C aufweist, die nach ASTM D7426-08 (2013) bestimmt wird;
(B) von 0 bis 40 ThK eines Polybutadiens;
(C) von 0 bis 20 ThK eines Prozessöls;
(D) von 40 bis 80 ThK eines Harzes, der eine Tg von mehr als 30°C aufweist, die nach ASTM D6604 bestimmt wird; und
(E) von 100 bis 180 ThK Kieselsäure;
wobei der funktionalisierte Isopren-Butadien-Kautschuk mit einer Silylgruppe funktionalisiert ist oder wobei der funktionalisierte Isopren-Butadien-Kautschuk mit einer Alkoxysilangruppe und gegebenenfalls einer Aminogruppe funktionalisiert ist.

2. Kautschukzusammensetzung nach Anspruch 1, wobei der funktionalisierte Isopren-Butadien-Kautschuk mit einer Silylgruppe funktionalisiert ist, die mit mindestens einem Mitglied der Gruppe bestehend aus Alkoxygruppen, Alkylgruppen und Alkylaminogruppen substituiert ist.

3. Kautschukzusammensetzung nach Anspruch 1, wobei der funktionalisierte Isopren-Butadien-Kautschuk mit einer Silylgruppe funktionalisiert ist, die mit einer Alkoxygruppe substituiert ist, die aus der Gruppe ausgewählt ist, die aus einer Methoxygruppe und einer Ethoxygruppe besteht.

4. Luftreifen nach Anspruch 1, wobei der funktionalisierte Isopren-Butadien-Kautschuk mit einer Silylgruppe funktionalisiert ist, die mit einer Alkylgruppe substituiert ist, die aus der Gruppe ausgewählt ist, die aus einer Methylgruppe, einer Ethylgruppe und einer Propylgruppe besteht.

5. Kautschukzusammensetzung nach Anspruch 1, wobei der funktionalisierte Isopren-Butadien-Kautschuk mit einer Silylgruppe funktionalisiert ist, die mit einer Alkylaminogruppe substituiert ist, die aus der Gruppe ausgewählt ist, die aus einer Diethylaminogruppe und einer Dimethylaminogruppe besteht.

6. Kautschukzusammensetzung nach mindestens einem der vorhergehenden Ansprüche, wobei das Harz ein C5/C9-Harz ist, das 50 bis 90 Gew.-% Piperylene, 0 bis 5 % Isopren, 10 bis 30 % Amylene, 0 bis 5% cyclische Verbindungen oder2 bis 5%cyclische Verbindungen, 0 bis 10 % Styrolverbindungen oder 4 bis 10 % Styrolverbindungen und 0 bis 10 % Indenverbindungen oder 4 bis 10 % Indenverbindungen umfasst.

7. Kautschukzusammensetzung nach mindestens einem der vorhergehenden Ansprüche, wobei das Harz ein C5/C9-Harz ist und einen Gehalt an aromatischem Wasserstoff von weniger als 25 Molprozent, vorzugsweise zwischen 3 und 15 Molprozent, aufweist.

8. Kautschukzusammensetzung nach mindestens einem der vorhergehenden Ansprüche, wobei das Öl aus der Gruppe ausgewählt ist, die aus aromatischen, paraffinischen, naphthenischen, MES, TDAE, schweren naphthenischen Ölen und pflanzlichen Ölen besteht.

9. Kautschukzusammensetzung nach mindestens einem der vorhergehenden Ansprüche, wobei die Menge des funktionalisierten Isopren-Butadien-Kautschuks in dem Bereich von 70 bis 95 ThK liegt; und/oder wobei die Menge des Polybutadiens in dem Bereich von 5 bis 30 ThK liegt.

10. Kautschukzusammensetzung nach mindestens einem der vorhergehenden Ansprüche, wobei die Menge des Öls in dem Bereich von 4 bis 15 ThK liegt.

11. Kautschukzusammensetzung nach mindestens einem der vorhergehenden Ansprüche, wobei die Menge des Harzes in dem Bereich von 50 bis 70 ThK liegt.

12. Kautschukzusammensetzung nach mindestens einem der vorhergehenden Ansprüche, wobei das Polybutadien einen cis-1,4-Gehalt von mehr als 95 Prozent und eine Tg in dem Bereich von -80°C bis - 110°C aufweist.

13. Luftreifen der eine Lauffläche umfasst, wobei die Lauffläche die vulkanisierbare Kautschukzusammensetzung nach mindestens einem der vorhergehenden Ansprüche als vulkanisierte oder als unvulkanisierte Kautschukzusammensetzung umfasst.

## Revendications

1. Composition de caoutchouc vulcanisable pour son utilisation dans une bande de roulement d'un bandage pneumatique, la composition de caoutchouc comprenant, en se basant sur 100 parties en poids d'élastomère (phr) :
(A) de 20 à 100 phr d'un caoutchouc d'isoprène-butadiène fonctionnalisé que l'on obtient par polymérisation en solution, qui possède une température de transition vitreuse (Tg) dans une plage qui s'élève de -100°C à -50 °C et que l'on détermine conformément à la norme ASTM D7426-08 (2013) ;
(B) de 0 à 40 phr d'un polybutadiène ;
(C) de 0 à 20 phr d'une huile de traitement ;
(D) de 40 à 80 phr d'une résine dont la valeurTg est supérieure à 30 °C et que l'on détermine conformément à la norme ASTM D6604 ; et
(E) de 100 à 180 phr d'une silice ;
dans laquelle le caoutchouc d'isoprène-butadiène fonctionnalisé est fonctionnalisé avec un groupe silyle ou dans laquelle le caoutchouc d'isoprène-butadiène fonctionnalisé est fonctionnalisé avec un groupe alcoxysilane et, de manière facultative, un groupe amino.

2. Composition de caoutchouc selon la revendication 1, dans laquelle le caoutchouc d'isoprène-butadiène fonctionnalisé est fonctionnalisé avec un groupe silyle substitué avec au moins un membre du groupe constitué par des groupes alcoxy, des groupes alkyle et des groupes alkylamino.

3. Composition de caoutchouc selon la revendication 1, dans laquelle le caoutchouc d'isoprène-butadiène fonctionnalisé est fonctionnalisé avec un groupe silyle substitué avec un groupe alcoxy qui est choisi parmi le groupe constitué par un groupe méthoxy et un groupe éthoxy.

4. Bandage pneumatique selon la revendication 1, dans laquelle le caoutchouc d'isoprène-butadiène fonctionnalisé est fonctionnalisé avec un groupe silyle substitué avec un groupe alkyle qui est choisi parmi le groupe constitué par un groupe méthyle, un groupe éthyle et un groupe propyle.

5. Composition de caoutchouc selon la revendication 1, dans laquelle le caoutchouc d'isoprène-butadiène fonctionnalisé est fonctionnalisé avec un groupe silyle substitué avec un groupe alkylamino qui est choisi parmi le groupe constitué par un groupe diéthylamino et un groupe diméthylamino.

6. Composition de caoutchouc selon au moins une des revendications précédentes, dans laquelle la résine représente une résine en C5/C9 qui comprend de 50 à 90 % (en poids) de pipérylènes, de 0 à 5 % d'isoprène, de 10 à 30 % d'amylènes, de 0 à 5 % de composés cycliques ou de 2 à 5 % de composés cycliques, de 0 à 10 % de composés styrénés ou de 4 à 10 % de composés styrénés, de 0 à 10 % de composés indénés ou de 4 à 10 % de composés indénés.

7. Composition de caoutchouc selon au moins une des revendications précédentes, dans laquelle la résine représente une résine en C5/C9 et possède une teneur en hydrogène aromatique qui est inférieure à 25 moles pour cent, de préférence qui se situe entre 3 et 15 moles pour cent.

8. Composition de caoutchouc selon au moins une des revendications précédentes, dans laquelle l'huile est choisie parmi le groupe constitué par des huiles aromatiques, des huiles paraffiniques, des huiles naphténiques, des huiles de type MES, des huiles de type TDAE, des huiles naphténiques lourdes et des huiles végétales.

9. Composition de caoutchouc selon au moins une des revendications précédentes, dans laquelle la quantité du caoutchouc d'isoprène-butadiène fonctionnalisé se situe dans une plage allant de 70 à 95 phr ; et/ou dans laquelle la quantité du polybutadiène se situe dans une plage allant de 5 à 30 phr.

10. Composition de caoutchouc selon au moins une des revendications précédentes, dans laquelle la quantité de l'huile se situe dans une plage allant de 4 à 15 phr.

11. Composition de caoutchouc selon au moins une des revendications précédentes, dans laquelle la quantité de la résine se situe dans une plage allant de 50 à 70 phr.

12. Composition de caoutchouc selon au moins une des revendications précédentes, dans laquelle le polybutadiène possède une teneur en 1,4 cis qui est supérieure à 95 % et une valeur Tg qui se situe dans une plage allant de -85 °C à -110°C.

13. Bandage pneumatique qui possède une bande de roulement, la bande de roulement comprenant la composition de caoutchouc vulcanisable selon au moins une des revendications précédentes sous la forme d'une composition de caoutchouc vulcanisé ou sous la forme d'une composition de caoutchouc non vulcanisé.
